# EUROPEAN PATENT SPECIFICATION

(11) **EP 3 186 734 B1**
(45) Date of publication and mention of the grant of the patent: **18.03.2020**
(21) Application number: 15835735.0
(22) Date of filing: 26.08.2015
(51) Int. Cl.: B82Y 10/00, H01L 29/775, H01L 27/02, H01L 29/06, H01L 27/092, H01L 21/8238

(54) **ARRAYS WITH COMPACT SERIES CONNECTION FOR VERTICAL NANOWIRES REALIZATIONS**
ARRAYS MIT KOMPAKTER REIHENSCHALTUNG FÜR VERTIKALE NANODRAHTREALISIERUNGEN
RÉSEAUX AVEC MONTAGE EN SÉRIE COMPACT POUR RÉALISATIONS DE NANOFILS VERTICAUX

(30) Priority: 26.08.2014 US 201462041854 P; 23.09.2014 US 201462054227 P; 24.09.2014 US 201462054653 P; 25.08.2015 US 201514834780
(43) Date of publication of application: 05.07.2017
(73) Proprietor: Synopsys, Inc., Mountain View, CA 94043 (US)
(72) Inventor: MOROZ, Victor, Saratoga, California 95070 (US); KAWA, Jamil, Campbell, California 95008 (US)
(74) Representative: Epping - Hermann - Fischer
(86) International application number: PCT/US2015/046891
(87) International publication number: WO 2016/033154

(56) References cited:
- EP-A1- 1 804 286
- US-A1- 2007 146 008
- US-A1- 2008 246 076
- US-A1- 2010 155 702
- US-A1- 2011 233 512
- US-A1- 2012 326 119
- US-A1- 2014 073 063
- Pierre-Emmanuel Gaillardon: "Reconfigurable Logic Architectures based on Disruptive Technologies", , 15 September 2011 (2011-09-15), pages 1-145, XP055459005, Retrieved from the Internet: URL:http://bibli.ec-lyon.fr/exl-doc/TH_T22 24_pgaillardon.pdf [retrieved on 2018-03-13]
- Mostafizur Rahman ET AL: "Skybridge: 3-D Integrated Circuit Technology Alternative to CMOS", , 2 April 2014 (2014-04-02), pages 1-52, XP055459125, Retrieved from the Internet: URL:https://arxiv.org/ftp/arxiv/papers/140 4/1404.0607.pdf [retrieved on 2018-03-14]
- PIERRE-EMMANUEL GAILLARDON ET AL: "Can we go towards true 3-D architectures?", DESIGN AUTOMATION CONFERENCE (DAC) 2011, 5 June 2011 (2011-06-05), - 10 June 2011 (2011-06-10), pages 282-283, XP031927752, San Diego, CA, USA ISBN: 978-1-4503-0636-2
- XIANG LI ET AL: "Vertically Stacked and Independently Controlled Twin-Gate MOSFETs on a Single Si Nanowire", IEEE ELECTRON DEVICE LETTERS, IEEE SERVICE CENTER, NEW YORK, NY, US, vol. 32, no. 11, 26 September 2011 (2011-09-26), pages 1492-1494, XP011358287, ISSN: 0741-3106, DOI: 10.1109/LED.2011.2165693

## Description

### BACKGROUND

### Field of the Invention

The present invention relates to integrated circuit devices, cell libraries, cell architectures and electronic design automation tools for integrated circuit devices.

### Description of Related Art

In the design of integrated circuits, standard functional cell libraries are often utilized. The process of designing the functional cells specified by entries in the cell libraries can be an intensive, where trade-offs among variables such as the size of the cells, the drive power of the cells, the speed of the cells and so on, are made by adjusting the materials, geometry and size of the components of the cell. The procedure of designing cells to be specified in a cell library is often a labor-intensive process, requiring highly skilled designers to manually design and refine the designs of the functional cells.

The development of finFETs has provided some additional flexibility for designers which can be applied in the efficient design of variations of specific functional cells. Thus, some functional libraries are based on FinFETs. FinFETs have been implemented in block structures having a grid structure, in which fins are laid out in parallel in first direction on a substrate with a narrow pitch, and gates are laid out in an orthogonal direction across the fins. The individual functional cells are formed using sets of complementary n-channel and p-channel transistors having their source, drain and channel in the fins. The drive power and other characteristics of individual transistors in a functional cell utilizing FinFETs can be adjusted by increasing or decreasing the number of identical fins utilized in parallel as the channel structure for a given transistor. This provides some granularity of design in the development of a cell library. However, many circuit parameters can benefit from finer tuning of circuit structures. To fine-tune finFET type circuits, complex reconfiguration of the fins or other structures may be required.

The PhD thesis "Reconfigurable Logic Architectures based on Disruptive Technologies" by Pierre-Emmanuel Gaillardon discloses a vertical silicon nanowire FET process for realizing the vertical integration of transistors in integrated circuits.

In "Skybridge: 3-D Integrated Circuit Technology Alternative to CMOS", (arXiv: 1404.0607), Rahman M. et al. describe circuit styles supporting both logic and volatile memory in 3-D and using only single-type and uniformly sized transistors.

EP 1 804 286 A1 relates to the creation of vertical stacks of two device structures of which a first device structure is a transistor device structure and a second device structure is a nanostructure device structure comprising at least one vertical elongate nanostructure, e.g. nanowire.

It is desirable to provide a functional cell design architecture suitable for implementation of functional cells for a functional cell library that can provide for fine variations in circuit parameters while reducing the design time and design effort required.

### SUMMARY

A cell architecture, and an integrated circuit design tool utilizing the cell architecture, are described. The functional cell library can have entries for plurality of functional cells. Entries include specifications of particular cells in a computer readable description language applying a cell architecture that includes transistors and interconnects implemented utilizing nanowires. Thus, at least one entry in the cell library can comprise a specification of the cell including a first transistor and a second transistor. The first transistor can include a first set of nanowires arranged in parallel to form a channel structure, and a gate conductor disposed across the first set of nanowires. The second transistor can include a second set of nanowires arranged in parallel to form a channel structure, and a gate conductor disposed across the first set of nanowires. The number of nanowires in the first set can be different from the number of nanowires in the second set, so that the drive power of the individual transistors can be set with fine granularity.

A cell library is described taking advantage of this granularity, which can include a set of functional cells that implement a common circuit, such as a NAND gate or other common logic cell. The cells in the set of functional cells can differ in the number of parallel nanowires used in the implementation of a particular transistor in the common circuit. Also, the cells in the set of functional cells can differ in the number of parallel nanowires used in the implementation of a particular interconnect in the common circuit. These variations in the number of parallel nanowires can provide for fine gradations in drive power or other characteristics of the transistors, and correspondingly different performance characteristics for the functional cell.

Nanowires can be used as interconnect elements in the construction of a cell library elements. Also, a horizontal N+ island used for the purpose of interconnect between vertical nanowire devices is described in this disclosure.

An integrated circuit is described herein.

The invention is defined by the independent claim.

The circuit includes a plurality of nanowire transistors, and a nanowire interconnect. At least two nanowire transistors in the plurality are electrically in series via at least the nanowire interconnect.

In some examples said at least two transistors are oriented vertically relative to a substrate. Some examples further comprise a conductor electrically connecting a source terminal of a first transistor of said at least two transistors and a drain terminal of a second transistor of said at least two transistors.

In some examples, said first transistor and said second transistor are a same conductivity type.

In some examples, the nanowire interconnect has an opposite conductivity type in contrast with said first vertical nanowire transistor and said second vertical nanowire transistor.

In some examples, said at least two nanowire transistors include a first vertical nanowire transistor and a second vertical nanowire transistor both being n-type transistors, and said nanowire interconnect is a first vertical nanowire electrically connecting a first drain of the first vertical nanowire transistor with a first source of the second vertical nanowire transistor.

The circuit includes an array of circuit cells, the circuit cells including a plurality of nanowire transistors and a vertical nanowire interconnect. The plurality of nanowire transistors includes a first vertical nanowire transistor and a second vertical nanowire transistor. The first vertical nanowire transistor includes a first gate at a first intermediate height in between a first source at a first source height and a first drain at a first drain height. The second vertical nanowire transistor includes a second gate at a second intermediate height in between a second source at a second source height and a second drain at a second drain height. The vertical nanowire interconnect traverses the first intermediate height of the first vertical nanowire transistor, and traverses the second intermediate height of the second vertical nanowire transistor, to electrically couple in series the first vertical nanowire transistor and the second vertical nanowire transistor.

In some examples said first vertical nanowire transistor and said second vertical nanowire transistor are a same conductivity type. In some examples the vertical nanowire interconnect has an opposite conductivity type in contrast with said first vertical nanowire transistor and said second vertical nanowire transistor.

In some examples said first vertical nanowire transistor and said second vertical nanowire transistor are n-type transistors, and said first vertical nanowire electrically connects the first drain of the first vertical nanowire transistor with the first source of the second vertical nanowire transistor.

In some examples said first vertical nanowire transistor and said second vertical nanowire transistor are a same conductivity type, and the circuit further comprises a third vertical nanowire transistor a third vertical nanowire transistor and a fourth vertical nanowire transistor, and a first conductor and a second conductor.

The third vertical nanowire transistor and the fourth vertical nanowire transistor have an opposite conductivity type in contrast with said first vertical nanowire transistor and said second vertical nanowire transistor.

The first conductor electrically connects the first gate of the first vertical nanowire transistor with a third gate of the third vertical nanowire transistor. The second conductor electrically connects the second gate of the second vertical nanowire transistor with a fourth gate of the fourth vertical nanowire transistor.

The first conductor and the second conductor are different electrical inputs of a NAND gate.

### BRIEF DESCRIPTION OF THE DRAWINGS

Figures 1A and 1B illustrate a schematic symbol and a transistor level schematic for a two-input NAND gate.
Figure 2 is a simplified layout diagram showing a top view of a two-input NAND gate implemented with nanowire devices and nanowire interconnects using vertical nanowires.
Figure 2A is a legend applicable to Figures 2 through 5.
Figure 3 is a layout diagram showing a cross-sectional view of the two-input NAND gate in Figure 2 taken at X-X'.
Figure 4 is a layout diagram showing a cross-sectional view of the two-input NAND gate in Figure 2 taken at Y-Y'.
Figure 5 is a layout diagram showing a cross-sectional view of the two-input NAND gate in Figure 2 taken at Z-Z'.
Figure 6 is a simplified layout diagram showing a top view of a two-input NAND gate implemented with horizontal and vertical nanowires.
Figure 6A is a legend applicable to Figures 6 through 9.
Figure 7 is a layout diagram showing a cross-sectional view of the two-input NAND gate in Figure 6 taken at X-X'.
Figure 8 is a layout diagram showing a cross-sectional view of the two-input NAND gate in Figure 6 taken at Y-Y'.
Figure 9 is a layout diagram showing a cross-sectional view of the two-input NAND gate in Figure 6 taken at Z-Z'.
Figure 10 is a simplified layout diagram showing a top view of a two-input NAND gate implemented with vertical nanowires, vertical nanowire interconnects and horizontal n+ island interconnect.
Figure 10A is a legend applicable to Figures 10 through 15.
Figure 11 is a layout diagram showing a cross-sectional view of the two-input NAND gate in Figure 10 taken at Z-Z'.
Figure 12 is a layout diagram showing a top view of a two-input NAND gate of Figure 10 with top view of M0 and M1 interconnect
Figure 13 is a layout diagram showing a cross-sectional view of the two-input NAND gate N-devices in Figure 12 with n+ island interconnect taken at X-X'.
Figure 14 is a layout diagram showing a cross-sectional view of the two-input NAND gate in Figure 12 with n+ p+ interconnect islands taken at Y-Y'
Figure 15 is a layout diagram showing a cross-sectional view of the two-input NAND gate in Figure 10 with M0 and M1 interconnect taken at Z-Z'
Figure 16 shows a simplified representation of an illustrative integrated circuit design flow.
Figures 17A, 17B and 17C are simplified block diagrams of a computer system as well as circuit design and circuit embodiments of the technology.
Figure 18 is a simplified flow diagram of a process for designing a nanowire cell for a cell library.
Figure 19 is a flowchart for a representative design automation process which can be implemented as logic executed by a system like that represented by Figure 20A-20C.

### DETAILED DESCRIPTION

A detailed description is provided with reference to the Figures. The following description will typically be with reference to specific structural embodiments and methods. It is to be understood that there is no intention to limit the invention to the specifically disclosed embodiments and methods but that the invention may be practiced using other features, elements, methods and embodiments. Preferred embodiments are described to illustrate the present invention, not to limit its scope, which is defined by the claims. Like elements in various embodiments are commonly referred to with like reference numerals.

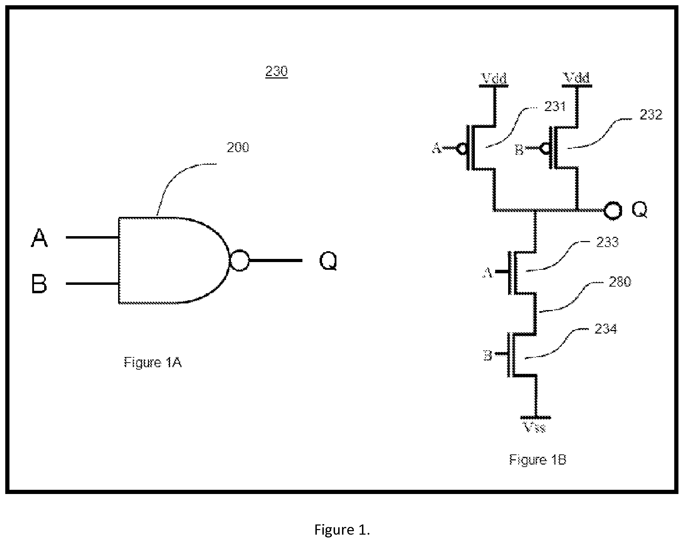

Figures 1A and IB illustrate a schematic symbol and a transistor level schematic for a two-input NAND gate which can be implemented using vertical nanowire structures as described herein.

Figure 1A shows an NAND gate 200 with two inputs A and B and an output Q. The logic function of an NAND gate is that when both inputs are at logic high, the output is at logic low, and when at least one of the inputs is at logic low, the output is at logic high.

Figure IB shows a transistor level schematic for a two-input NAND gate 230 with two inputs A and B and an output Q. A functional cell implementing a NAND gate can have the particular circuit configuration shown. A cell library can include more than one cell that implements the same particular circuit configuration, differing in the number of nanowires used in implementation of a particular transistor or interconnect in the circuit, or of particular transistors or interconnects in the circuit.

The NAND gate includes two PMOS transistors 231 and 232 connected in parallel, and two NMOS transistors 233 and 234 connected in series. A transistor includes three terminals: a drain, a source and a gate. Input A is connected to gates of the PMOS transistor 231 and the NMOS transistor 233. Input B is connected to gates of the PMOS transistor 232 and the NMOS transistor 234. When a transistor is turned on by a voltage on the gate, a current flows between the drain and the source, reducing the voltage difference between the drain and source. Sources of the PMOS transistors 231 and 232 are connected to the supply voltage (e.g. Vdd), while drains of the PMOS transistors 23 land 232 are connected to the output Q. Drain of the NMOS transistor 233 is connected to the output Q, while source of the NMOS transistor 234 is connected to the ground voltage (e.g. Vss).

If a low voltage corresponding to logic low is applied to either of the inputs A or B, then at least one of the NMOS transistors 233 and 234 is turned off so that the ground voltage (e.g. Vss) is disconnected from the output Q, while at least one of the PMOS transistors 231 and 232 is turned on so that the supply voltage (e.g. Vdd) is connected to the output Q. Consequently the output Q is at logic high in response to a low voltage applied to at least one of the inputs A and B.

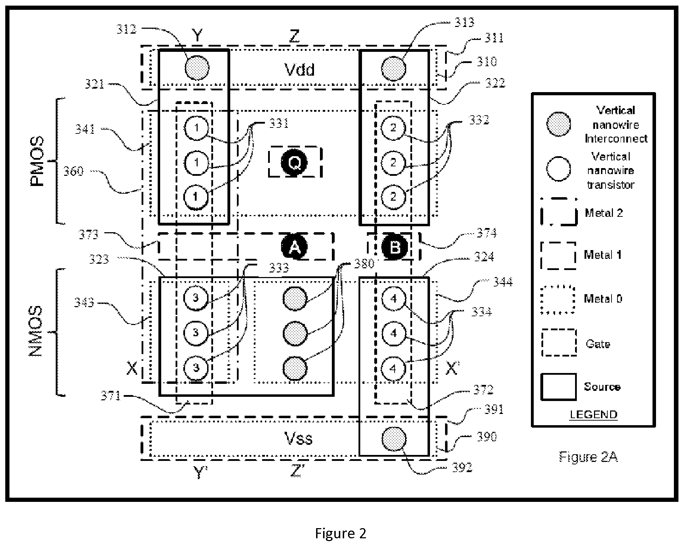

Figure 2 is a simplified layout diagram showing a top view of a two-input NAND gate implemented with nanowires and nanowire interconnects using vertical nanowires. Figure 2A is a legend applicable to Figures 2 through 5.

The two-input NAND gate is an example of a cell implemented with nanowires and nanowire interconnects that can be specified by a computer readable circuit description language, and used an entry in a cell library. The entry can be part of cell library used in electronic design synthesis. For instance, the other entries in the cell library can specify functional cells and macrocells, including buffers, inverters, AND, NAND, OR, NOR, XOR, XNOR, adders, subtractors, multiplexers, decoders, flipflops, counters, shift registers, and cells with more complex logical functions. The entries can specify a plurality of functional cells have a common circuit configuration, and are implemented with nanowires and nanowire interconnects can have a variety of drive strengths, and inverting and non-inverting outputs of same logical functions.

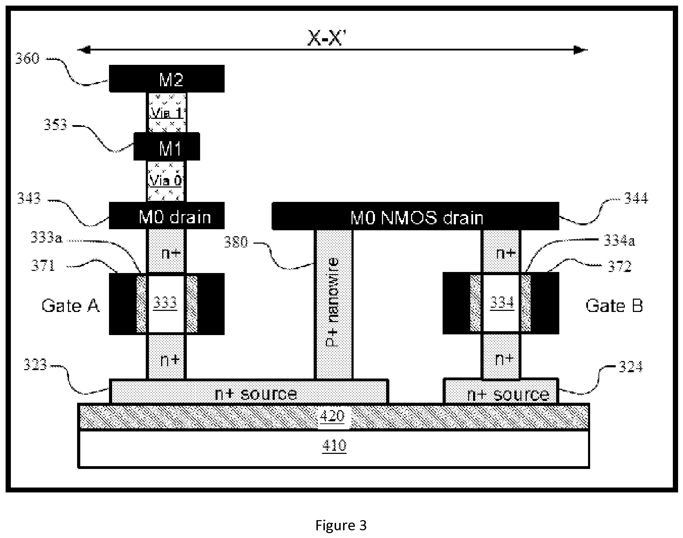

The two-input NAND gate can be disposed on a substrate (e.g. 410, Figure 3) having a surface. As illustrated in the example of Figure 2, a transistor 331 including a first set of nanowires disposed vertically relative to the surface of the substrate can implement the PMOS transistor 231 in the two-input NAND gate 230 (Figure 1B), and a transistor 332 including a second set of nanowires disposed vertically relative to the surface of the substrate can implement the PMOS transistor 232 in the two-input NAND gate 130. Likewise, a transistor 233 including a third set of nanowires disposed vertically relative to the surface of the substrate can implement the NMOS transistor 233 in the two-input NAND gate 230, and a transistor 334 including a fourth set of nanowires disposed vertically relative to the surface of the substrate can implement the NMOS transistor 234 in the two-input NAND gate 230.

Components in the layout of the two-input NAND gate include patterned conductor layers that include a first metal layer (metal-0 or M0), a second metal layer (metal-1 or M1), and a third metal layer (metal-2 or M2). The metal-0 layer is beneath the metal-1 layer, and the metal-1 layer is beneath the metal-2 layer. Nanowires are beneath the metal-0 layer, and source regions for the transistors are beneath the nanowires. The first gate conductor 371 and the second gate conductor 372 cross the sets of nanowires between the first metal layer and the source regions for the nanowires. Although three patterned conductor layers are shown, more than three patterned conductor layers can be utilized.

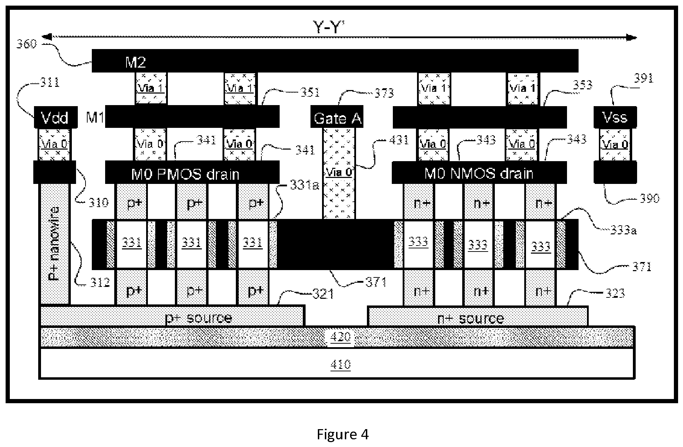

Nanowires in a set of nanowires used as a channel structure in a transistor are connected in parallel between two terminals. In particular, nanowires in transistor 331 are connected in parallel between terminals connected to the source region 321 and a metal-0 PMOS drain conductor 341 in the metal-0 layer, and nanowires in transistor 332 are connected in parallel between terminals connected to the source region 322 and the metal-0 PMOS drain conductor 341. A metal-1 conductor (e.g. 351, Figure 4) connects the metal-0 PMOS drain conductor 341 to a metal-2 connector 360.

Nanowires in transistor 333 are connected in parallel between terminals connected to the source region 323 and a metal-0 NMOS drain conductor 343 in the metal-0 layer, and nanowires in transistor 334 are connected in parallel between terminals connected to the source region 324 and a metal-0 drain conductor 344. A metal-1 conductor (e.g. 353, Figures 3 and 4) connects the metal-0 PMOS drain conductor 343 to the metal-2 connector 360. Parallel connection of the nanowires is further described in connection with Figure 4.

A first gate conductor 371 crosses the nanowires in the first set of nanowires in the transistor 331, and crosses the nanowires in the third set of nanowires in the transistor 333, between their respective two terminals. The first gate conductor 371 is connected to a metal-1 connector 373, at which a signal is applied for the input A. The metal-1 connector 373 can be connected to the first gate conductor 371 at a location on the first gate conductor 371 between the first set of nanowires in the transistor 331 and the third set of nanowires in the transistor 333.

A second gate conductor 372 crosses the nanowires in the second set of nanowires in the transistor 332, and crosses the nanowires in the fourth set of nanowires in the transistor 334, between their respective two terminals. The second gate conductor 372 is connected to a metal-1 connector 374, at which a signal is applied for the input B. The metal-1 connector 374 can be connected to the second gate conductor 372 at a location on the second gate conductor 372 between the second set of nanowires in the transistor 332 and the fourth set of nanowires in the transistor 334. The first gate conductor 371 and the second gate conductor 372 are further described in connection with Figure 4.

A metal-0 conductor 310 in the metal-0 layer is connected to a VDD power conductor 311 in the metal-1 layer, connected to the source region 321 of the PMOS transistor 331 via nanowire interconnect 312, and connected to the source region 322 of the PMOS transistor 332 via nanowire interconnects 313. A metal-0 conductor 390 in the metal-0 layer is connected to a VSS power conductor 391 in the metal-1 layer, and connected to the source region 324 of the NMOS transistor 334 via nanowire interconnect 392.

Although three vertical nanowires are shown for each set, the first, second, third and fourth sets of nanowires can each have a number of nanowires the same as or different than other sets, depending on the need to balance NMOS and PMOS transistors or transistor strengths required by design specification. Although nanowires in a set are shown in a row of three nanowires, a set of nanowires can include multiple rows of nanowires, and each row can have a different number of nanowires. In other examples nanowires of varying widths can be utilized in the various sets of nanowires.

As illustrated in the example of Figure 2, a set of nanowires configured as a nanowire interconnect 380 is disposed vertically relative to the surface of the substrate. The set of nanowires is connected in parallel between first and second terminals. The first terminal can be one of the source region 323 of the transistor 333 and the metal-0 drain conductor 344 of the transistor 334, while the second terminal can be another of the source region 323 and the metal-0 drain conductor 344.

The nanowire interconnect 380 is further described in connection with Figure 3. The nanowire interconnect 380 can implement the connection 280 between the NMOS transistors 233 and 234 in the circuit configuration of a two-input NAND gate 230 as illustrated in Figure 1B.

Although one set of nanowires configured as a vertical nanowire interconnect is shown in the example of Figure 2, more sets of nanowires can be configured as vertical nanowire interconnects. For instance, a first set of nanowires configured as a first nanowire interconnect can be disposed vertically relative to the surface of the substrate and connected in parallel between first and second terminals, and a second set of nanowires configured as a second interconnect can be disposed vertically relative to the surface of the substrate and connected in parallel between a third terminal and a fourth terminal. The first set of nanowires can include a first number of nanowires, and the second set of nanowires can include a second number of nanowires, and the second number can be different than the first number.

Figure 3 is a diagram showing a cross-sectional view of the two-input NAND gate in Figure 2 taken at X-X'. Elements in the two-input NAND gate are shown disposed on an insulation layer (e.g. 420) on a substrate (e.g. 410). Areas between the elements are filled with dielectric material such as silicon oxide, silicon nitride, low-k dielectric ((having a relative permeability less than that of silicon dioxide, or less than 3.9, e.g. SiOC), or with combinations of materials.

Nanowires in transistor 333 are connected in parallel between terminals connected to the source region 323 and the metal-0 NMOS drain conductor 343 in the metal-0 layer. A metal-1 conductor (e.g. 353) connects the metal-0 PMOS drain conductor 343 to the metal-2 connector 360 through Via 1 and Via 0. Nanowires in transistor 334 are connected in parallel between terminals connected to the source region 324 and the metal-0 drain conductor 344.

Nanowires in transistor 333 are sheathed by insulating material (e.g. 333a), such as silicon dioxide or a high-k insulating material (having a relative permeability greater than that of silicon dioxide, or greater than 3.9). The first gate conductor 371 crosses the nanowires in transistor 333 between the source region 323 and the metal-0 NMOS drain conductor 343. Nanowires in transistor 334 are sheathed by insulating material (e.g. 334a), such as high-k insulating material. The second gate conductor 372 crosses the nanowires in transistor 334 between the source region 324 and the metal-0 NMOS drain conductor 344.

Figure 4 is a layout diagram showing a cross-sectional view of the two-input NAND gate in Figure 2 taken at Y-Y'. Elements in the two-input NAND gate are shown disposed on an insulation layer (e.g. 420) on a substrate (e.g. 410). Areas between the elements are filled with dielectric material such as oxide (SiO2), nitride (SiN), or low-k dielectric (SiOC).

Nanowires in transistor 331 are connected in parallel between terminals connected to the source region 321 and the metal-0 NMOS drain conductor 341 in the metal-0 layer. A metal-1 conductor (e.g. 351) connects the metal-0 PMOS drain conductor 341 to the metal-2 connector 360 through Via 1 and Via 0. Nanowires in transistor 331 are sheathed by insulating material (e.g. 331a), such as high-k insulating material. The first gate conductor 371 crosses the nanowires in transistor 331 between the source region 321 and the metal-0 NMOS drain conductor 341.

Nanowires in transistor 333 are connected in parallel between terminals connected to the source region 323 and the metal-0 NMOS drain conductor 343 in the metal-0 layer. A metal-1 conductor (e.g. 353) connects the metal-0 PMOS drain conductor 343 to the metal-2 connector 360 through Via 1 and Via 0. Nanowires in transistor 333 are sheathed by insulating material (e.g. 333a), such as high-k insulating material. The first gate conductor 371 crosses the nanowires in transistor 333 between the source region 323 and the metal-0 NMOS drain conductor 343.

The first gate conductor 371 is connected to a metal-1 connector 373, at which a signal is applied for the input A. The first gate conductor 371 is connected to the metal-1 connector 373 through a via 431.

The metal-0 conductor 310 in the metal-0 layer is connected to the VDD power conductor 311 in the metal-1 layer, and connected to the source region 321 of the PMOS transistor 331 via nanowire interconnect 312. The metal-0 conductor 390 in the metal-0 layer is connected to the VSS power conductor 391 in the metal-1 layer, and connected to the source region 324 of the NMOS transistor 334 via nanowire interconnect 392 (not shown).

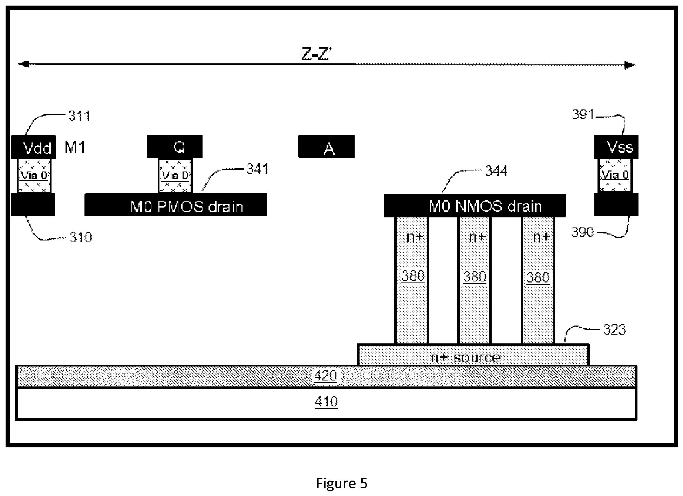

Figure 5 is a layout diagram showing a cross-sectional view of the two-input NAND gate in Figure 2 taken at Z-Z'. Elements in the two-input NAND gate are shown disposed on an insulation layer (e.g. 420) on a substrate (e.g. 410). Areas between the elements are filled with dielectric material such as oxide (SiO2), nitride (SiN), or low-k dielectric (SiOC).

The VDD power conductor 311 in the metal-1 layer, and the VSS power conductor 391 in the metal-1 layer are as described in connection to Figure 4.

A set of nanowires configured as the nanowire interconnect 380 is disposed vertically relative to the surface of the substrate. The set of nanowires is connected in parallel between the source region 323 of the transistor 333 and the metal-0 NMOS drain conductor 344 of the transistor 334.

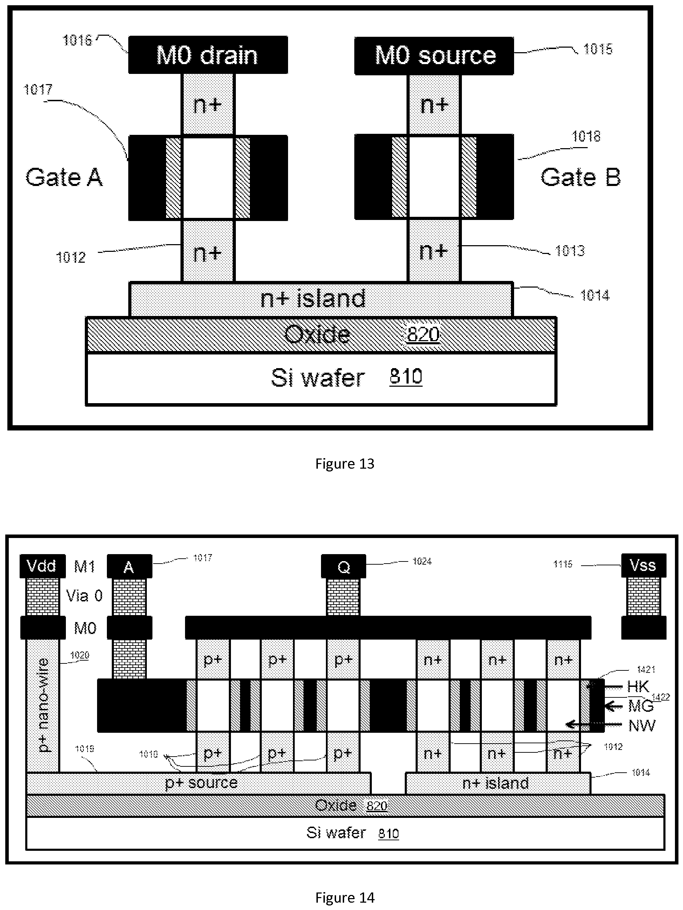

The output Q is connected to the metal-0 PMOS drain conductor 341 in the metal-0 layer, which in turn is connected to nanowires in the transistor 331 (Figure 13). The input A is connected to the metal-1 connector 373 (Figure 13), which in turn is connected to the first gate conductor 371.

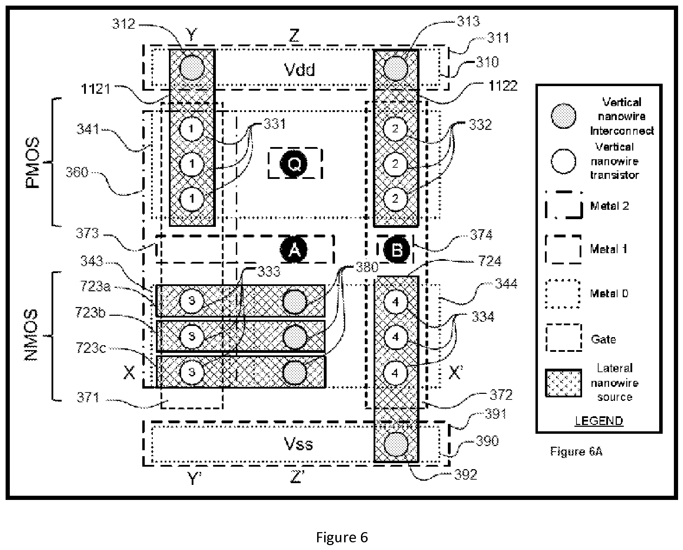

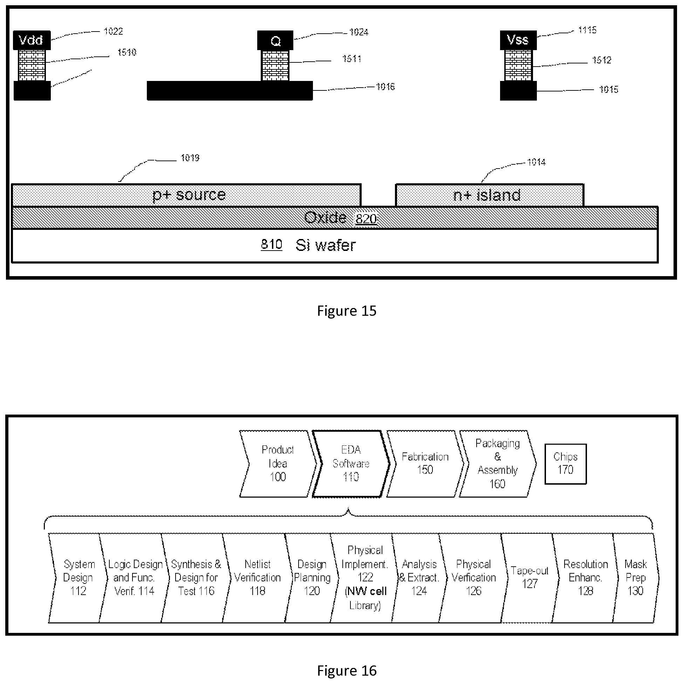

Figure 6 is a simplified layout diagram showing a top view of a two-input NAND gate implemented with horizontal and vertical nanowires. Figure 15A is a legend applicable to Figures 6 through 9. Like elements in Figures 6-9 are commonly referred to with like reference numerals in Figures 2-5.

Like elements in Figures 6-9 that are described in Figures 2-5 include the substrate (e.g. 810), sets of nanowires connected in parallel as transistors (e.g. 331-334), a set of nanowires connected in parallel as a nanowire interconnect (e.g. 380), metal layers (e.g. M0, M1, M2) and various conductors in the metal layers, source regions for the transistors, gate conductors crossing the sets of nanowires (e.g. 371, 372), inputs A and B, output Q, a VDD power conductor (e.g. 311), and a VSS power conductor (e.g. 391). Description about the like elements is not repeated for Figures 6-9.

A first set of nanowires can be configured as an interconnect disposed horizontally relative to the surface of the substrate, and connected in parallel between a first terminal and a second terminal. A second set of nanowires can be configured as an interconnect disposed horizontally relative to the surface of the substrate, and connected in parallel between a third terminal and a fourth terminal. The first set of nanowires includes a first number of nanowires, the second set of nanowires includes a second number of nanowires, and the second number can be different than the first number. A set of nanowires can have one or more nanowires.

As illustrated in the example of Figure 6, horizontal nanowires are configured to connect to the drain ends or source ends of the nanowires in the set of nanowires of transistors in the two-input NAND gate. In particular, horizontal nanowire interconnects 721, 722 and 724 are configured to connect to the source ends of the nanowires in transistors 331, 332 and 334. Horizontal nanowire interconnects 723a, 723b and 723c are configured to connect to the source ends of the nanowires in the set of nanowires of the transistor 333.

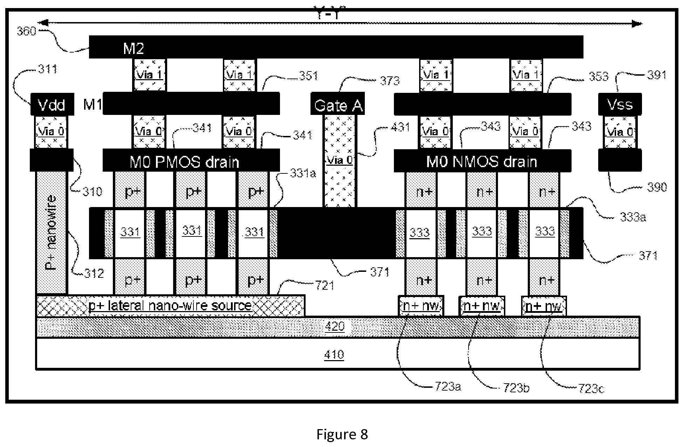

The metal-0 conductor 310 is connected to the VDD power conductor 311 in the metal-1 layer, connected to the horizontal nanowire interconnect 721 for the source of the PMOS transistor 331 via vertical nanowire interconnect 312 (beneath the nanowires of transistor 331, see Figure 8), and connected to the horizontal nanowire interconnect 722 (beneath the nanowires of transistor 332) for the source of the PMOS transistor 332 via vertical nanowire interconnect 313. The metal-0 conductor 390 in the metal-0 layer is connected to a VSS power conductor 391 in the metal-1 layer, and connected to the nanowire interconnect 724 for the source of the NMOS transistor 334 via vertical nanowire interconnect 392.

A set of nanowires in a transistor are connected in parallel between two terminals. In particular, nanowires in transistor 331 are connected in parallel between terminals connected to the nanowire interconnect 721 and a metal-0 PMOS drain conductor 341 in the metal-0 layer, and nanowires in transistor 332 are connected in parallel between terminals connected to the nanowire interconnect 722 and the metal-0 PMOS drain conductor 341.

Nanowires in transistor 333 are connected in parallel between terminals connected to the nanowire interconnect including nanowires 723a, 723b and 723c, and a metal-0 NMOS drain conductor 343 in the metal-0 layer. Nanowires in transistor 334 are connected in parallel between terminals connected to the nanowire interconnect 724 and a metal-0 drain conductor 344.

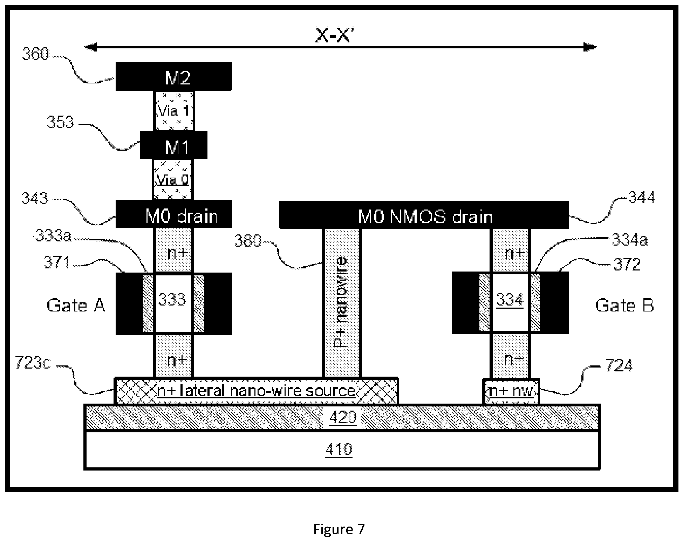

Figure 7 is a layout diagram showing a cross-sectional view of the two-input NAND gate in Figure 6 taken at X-X'. Nanowires in transistor 333 are connected in parallel between terminals connected to the nanowire interconnect 723c for the source of the transistor 333, and the metal-0 NMOS drain conductor 343 in the metal-0 layer. Nanowires in transistor 334 are connected in parallel between terminals connected to the nanowire interconnect 724 for the source of the transistor 334, and the metal-0 drain conductor 344. Vertical nanowires in the nanowire interconnect 380 are connected in parallel between the nanowire interconnect 723c for the source of the transistor 333, and the metal-0 NMOS drain conductor 344 of the transistor 334.

Figure 8 is a layout diagram showing a cross-sectional view of the two-input NAND gate in Figure 6 taken at Y-Y'. Nanowires in transistor 331 are connected in parallel between terminals connected to the nanowire interconnect 721 for the source of the transistor 331, and a metal-0 PMOS drain conductor 341 in the metal-0 layer. Nanowires in transistor 333 are connected in parallel between terminals connected to the nanowire interconnect including nanowires 723a, 723b and 723c for the source of transistor 333, and a metal-0 NMOS drain conductor 343 in the metal-0 layer.

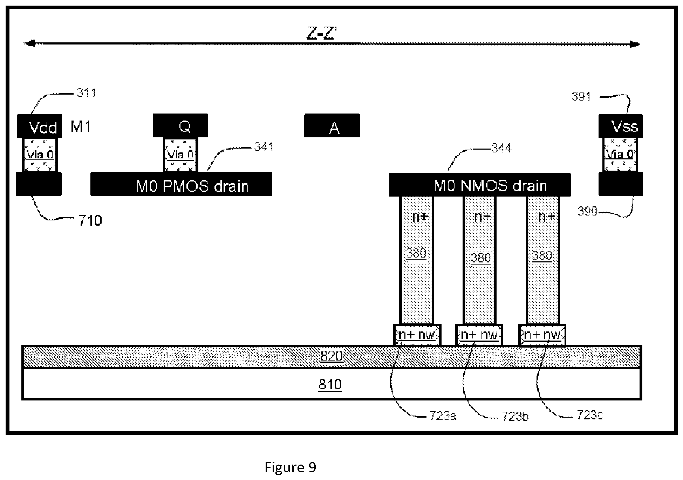

Figure 9 is a layout diagram showing a cross-sectional view of the two-input NAND gate in Figure 6 taken at Z-Z'. A set of nanowires configured as the nanowire interconnect 380 is disposed vertically relative to the surface of the substrate. The set of nanowires is connected in parallel between the nanowires 723a, 723b and 723c for the source of transistor 333, and the metal-0 NMOS drain conductor 344 of the transistor 334.

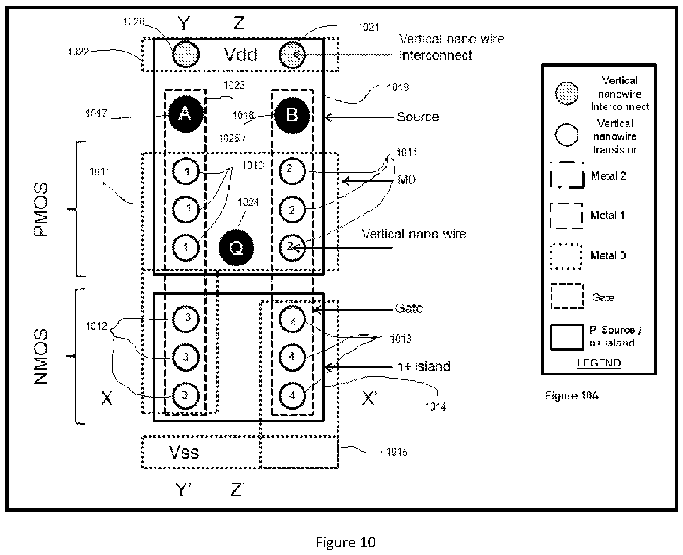

Figure 10 is a simplified layout diagram showing a top view of a two-input NAND gate implemented with vertical nanowires devices and interconnects using vertical nanowires and an N+ island. Figure 10A is a legend applicable to Figures 10 through 13.

In this implementation of the two-input NAND gate transistor 1010 including a first set of nanowires disposed vertically relative to the surface of the substrate can implement the PMOS transistor 231 in the two-input NAND gate 230 (Figure 1B), and a transistor 1011 including a second set of nanowires disposed vertically relative to the surface of the substrate can implement the PMOS transistor 232 in the two-input NAND gate 230. Likewise, a transistor 1012 including a third set of nanowires disposed vertically relative to the surface of the substrate can implement the NMOS transistor 233 in the two-input NAND gate 230, and a transistor 1013 including a fourth set of nanowires disposed vertically relative to the surface of the substrate can implement the NMOS transistor 234 in the two-input NAND gate 230.
The source of the N transistors 1012 is connected to the drain of transistors 1013 through an N+ island 1014. The sources of the P transistors 1010 and 1011 are also connected through the common P+ SOI (Semiconductor-On-Insulator) island 1019.

Components in the layout of the two-input NAND gate include patterned conductor layers that include a first metal layer (metal-0 or M0) and gate conductors 1023 and 1025.. Nanowires are beneath the metal-0 layer, and source or drain regions for the transistors are beneath the nanowires. The first gate conductor 1023 and the second gate conductor 1025 cross the sets of nanowires between the first metal layer and the source/drain regions of the nanowires. Although two patterned conductor layers are shown, more than two patterned conductor layers can be utilized.

Nanowires in a set of nanowires used as a channel structure in a transistor are connected in parallel between two terminals. In particular, nanowires in transistor 1010 are connected in parallel between terminals connected to the source region 1019 and a metal-0 PMOS drain conductor 1016 in the metal-0 layer, and nanowires in transistor 1011 are connected in parallel between terminals connected to the source region 1019 and the metal-0 PMOS drain conductor 1016.

Nanowires in transistor 1012 are connected in parallel between terminals connected to an N+ SOI island 1014 and a metal-0 NMOS drain conductor 1016 in the metal-0 layer, and nanowires in transistor 1013 are connected in parallel between terminals connected to the N+ island 1014 and a metal-0 source conductor 1015. In this configuration the source of transistor 1012 and drain of transistor 1013 are therefore connected through the N+ island 1014.

A first gate conductor 1023 crosses the nanowires in the first set of nanowires in the transistor 1010, and crosses the nanowires in the third set of nanowires in the transistor 1012, between their respective two terminals. The first gate conductor 1023 is connected to input A 1017.

A metal-0 conductor 1022 in the metal-0 layer is connected to a VDD power conductor in the metal-1 layer, connected to the source region 1019 of the PMOS transistor 1010 via nanowire interconnect 1020, and connected to the source region 1019 of the PMOS transistor 1011 via nanowire interconnects 1021. A metal-0 conductor 1015 in the metal-0 layer is connected to a VSS power conductor in the metal-1 layer, and connected to the source of the NMOS transistor 1013.

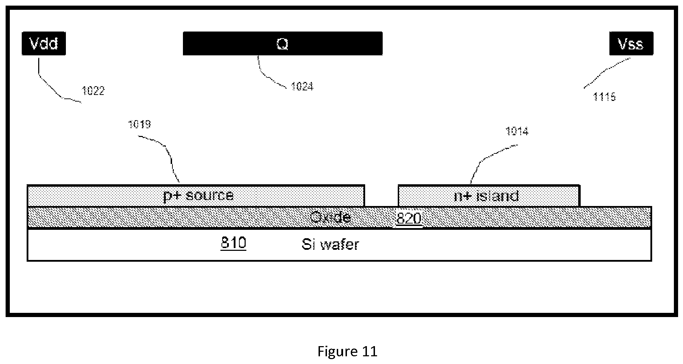

Figure 11 is a layout diagram showing a cross-sectional view of the two-input NAND gate in Figure 10 taken at Z-Z'. For the two sets of PMOS transistors 1010 and 1011 the p+ source area 1019 is the common source connection of the transistors. The p+ region is further connected to the top vdd connector 1022 by the vertical nanowire 1020 of figure 10. The n+ island 1014 allows the serial connection of the source of transistor 1012 to the drain of transistor 1013 eliminating the need of an added column of the vertical nanowire interconnect 380 shown in figure 2 of the classical 2-inpunt NAND implementation.
Vss connector 1115 is connected to the source of transistor 1013 as described further in Figure 13.

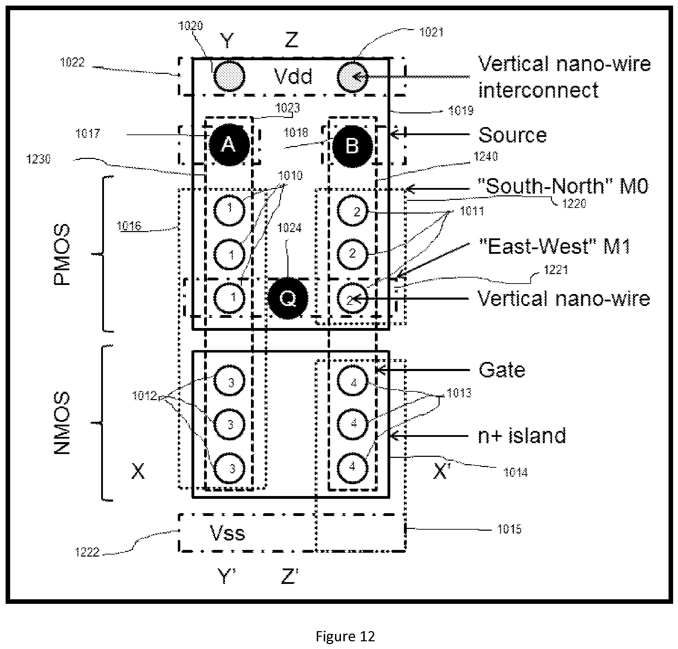

Figure 12 is a simplified layout diagram that shows an alternative design of the 2-input NAND logic cell that uses one more metal layers (metal-1 orMl) than the layout shown on Fig. 10. The additional metal layer is necessary if a so-called "1D" interconnect approach is taken, with M0 oriented in south-north direction (i.e. from Vdd power bus towards Vss ground bus) and M1 oriented in east-west direction (i.e. perpendicular to M0 direction). The "1D" interconnect is easier to implement in terms of lithography and patterning and therefore it can be easier to manufacture. As illustrated in the example of Figure 12, The metal-0 conductor 1022 is connected to the VDD power conductor in the metal-1 layer, connected to the vertical nanowire interconnect 1020 and 1021 for the sources of the PMOS transistors 1010 and 1011, respectively. The metal-0 conductor 1015 in the metal-0 layer is connected to a VSS power conductor 1222 in the metal-1 layer, to the source of the NMOS transistor 1013.
Gate 1230 is contacted through metal-0 and brought out at metal-1 connector 1017. Similarly gate 1240 is contacted to connector 1018, B at metal-1 through a metal-0 contact as illustrated further in figure 14
Metal-1 conductor 1221 with connector Q connects the two drains of P- transistors 1010 and 1011 and the drain of the N-transistor 1012 through metal-0 regions 1016 and 1220

Figure 13 is a layout diagram showing a cross-sectional view of the two-input NAND gate N-devices of Figure 12 with the n+ island interconnect taken at X-X'. The n+ island 1014 allows the serial connectivity of the drain of N-transistor 1013 of gate B, 1018 whose source is connected to VSS through the metal-0 (1015 of figure 12) to connect directly to the source of N-transistor 1012 with gate A, (1017 of figure 12), and drain connected to node Q (1024 of figure 12) without the need of a vertical nanowire interconnect as is the case of figure 2 and figure 3.

Figure 14 is a layout diagram showing a cross-sectional view of the two-input NAND gate in Figure 12 with n+ and p+ interconnect islands taken at Y-Y'. This cross section demonstrates the connectivity of the common gate A metal-1 connector 1017 through a via-0 and a metal-0 to the common gate of P-transistor 1010 and N-transistor 1012.

Figure 15 is a layout diagram showing a cross-sectional view of the two-input NAND gate in Figure 10 with M0 and M1 interconnect taken at Z-Z'. It shows the p+ source 1019 that connects the sources of the P-transistors 1010 and 1011 of figure 10 and the n+ island 1014 that connects the source of N-transistor 1012 to the drain of N-transistor 1013. Figure 15 shows metal-1VDD, 1022 connected to the metal-0 of the p+ source vertical nanowire connector through via-0 1510. It similarly shows the metal-1 Q connector 1024 connected to the metal-0 common drains of P-transistors 1010 and 1011, and N-transistor 1012 through via-0 1511. Metal-1 connector VSS 1115 is connected to the source of N-transistor 1013 through metal-0 1015 and via-0 1512.

Figure 16 shows a simplified representation of an illustrative integrated circuit design flow. As with all flowcharts herein, it will be appreciated that many of the steps of Figure 16 can be combined, performed in parallel or performed in a different sequence without affecting the functions achieved. In some cases a rearrangement of steps will achieve the same results only if certain other changes are made as well, and in other cases a rearrangement of steps will achieve the same results only if certain conditions are satisfied.

At a high level, the process of Figure 16 starts with the product idea (block 100) and is realized in an EDA (Electronic Design Automation) software design process (block 110). When the design is finalized, the fabrication process (block 150) and packaging and assembly processes (block 160) occur, ultimately resulting in finished integrated circuit chips (result 170).

The EDA software design process (block 110) is actually composed of a number of steps 112-130, shown in linear fashion for simplicity. In an actual integrated circuit design process, the particular design might have to go back through steps until certain tests are passed. Similarly, in any actual design process, these steps may occur in different orders and combinations. This description is therefore provided by way of context and general explanation rather than as a specific, or recommended, design flow for a particular integrated circuit.

A brief description of the component steps of the EDA software design process (block 110) will now be provided.

System design (block 112): The designers describe the functionality that they want to implement; they can perform what-if planning to refine functionality; check costs; *etc.* Hardware-software architecture selection can occur at this stage. Example EDA software products that have been available from Synopsys, Inc. that could be used at this step include Model Architect, Saber, System Studio, and DesignWare® products.

Logic design and functional verification (block 114): At this stage, high level description language (HDL) code, such as the VHDL or Verilog code, for modules in the system is written and the design is checked for functional accuracy. More specifically, the design is checked to ensure that it produces the correct outputs in response to particular input stimuli. Example EDA software products that have been available from Synopsys, Inc. that could be used at this step include VCS, VERA, DesignWare®, Magellan, Formality, ESP and LEDA products.

Synthesis and design for test (block 116): Here, the VHDL/Verilog is translated to a netlist. The netlist can be optimized for the target technology. Additionally, the design and implementation of tests to permit checking of the finished chip occur. Example EDA software products that have been available from Synopsys, Inc. that could be used at this step include Design Compiler®, Physical Compiler, Test Compiler, Power Complier, FPGA Compiler, TetraMAX, and DesignWare® products. Optimization of design for use of end-to-end finFET blocks as described below can occur in this stage.

Netlist verification (block 118): At this step, the netlist is checked for compliance with timing constraints and for correspondence with the VHDL/Verilog source code. Example EDA software products that have been available from Synopsys, Inc. that could be used at this step include Formality, PrimeTime, and VCS products.

Design planning (block 120): Here, an overall floor plan for the chip is constructed and analyzed for timing and top-level routing. Example EDA software products that have been available from Synopsys, Inc. that could be used at this step include Astro and IC Compiler products. Nanowire based functional cell selection, layout and optimization can occur at this stage.

Physical implementation (block 122): The placement (positioning of circuit elements) and routing (connection of the same) occurs at this step. Example EDA software products that have been available from Synopsys, Inc. that could be used at this step include AstroRail, Primetime, and Star RC/XT products. Nanowire based functional cell layout, mapping and interconnect arrangements can be implemented or optimized at this stage, using for example nanowire functional cells based on nanowire cell layouts and structures described herein.

Analysis and extraction (block 124): At this step, the circuit function is verified at a transistor level; this in turn permits what-if refinement. Example EDA software products that have been available from Synopsys, Inc. that could be used at this stage include Custom Designer, AstroRail, PrimeRail, Primetime, and Star RC/XT products.

Physical verification (block 126): At this stage various checking functions are performed to ensure correctness for: manufacturing, electrical issues, lithographic issues, and circuitry. Example EDA software products that have been available from Synopsys, Inc. that could be used at this stage include the Hercules product.

Tape-out (block 127): This stage provides the "tape-out" data for production of masks for lithographic use to produce finished chips. Example EDA software products that have been available from Synopsys, Inc. that could be used at this stage include the CATS(R) family of products.

Resolution enhancement (block 128): This stage involves geometric manipulations of the layout to improve manufacturability of the design. Example EDA software products that have been available from Synopsys, Inc. that could be used at this stage include Proteus/Progen, ProteusAF, and PSMGen products.

Mask preparation (block 130): This stage includes both mask data preparation and the writing of the masks themselves. Example EDA software products that have been available from Synopsys, Inc. that could be used at this stage include CATS(R) family of products.

Examples of the nanowire cell-based and block-based technology described herein can be used during one or more of the above-described stages, including for example one or more of stages 116 through 122 and 130. Also, nanowire cell and block technology provides flexibility that enables the implementation of engineering change orders ECOs, including modification of the functional cell sizes during design verification stages.

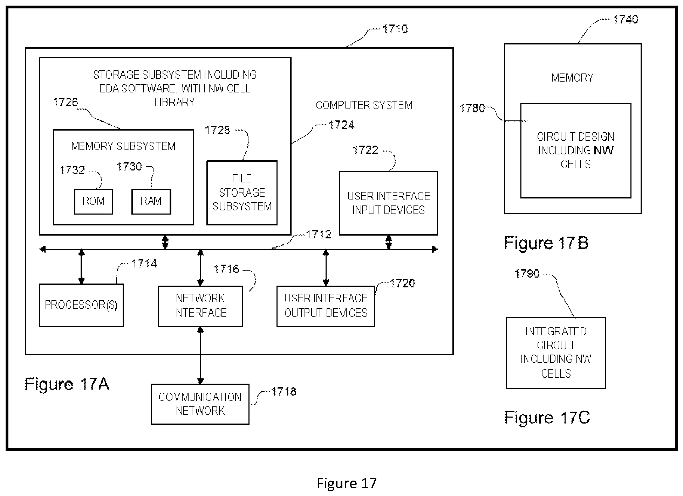

Figures 17A, 17B and 17C are simplified block diagrams of a computer system, as well as circuit design and circuit. Computer system 2010 typically includes at least one processor 2014 which communicates with a number of peripheral devices via bus subsystem 2012. These peripheral devices may include a storage subsystem 2024, comprising a memory subsystem 2026 and a file storage subsystem 2028, user interface input devices 2022, user interface output devices 2020, and a network interface subsystem 2016. The input and output devices allow user interaction with computer system 2010. Network interface subsystem 2016 provides an interface to outside networks, including an interface to communication network 2018, and is coupled via communication network 2018 to corresponding interface devices in other computer systems. Communication network 2018 may comprise many interconnected computer systems and communication links. These communication links may be wireline links, optical links, wireless links, or any other mechanisms for communication of information. While in one example communication network 2018 is the Internet, communication network 2018 may be any suitable computer network.

User interface input devices 2022 may include a keyboard, pointing devices such as a mouse, trackball, touchpad, or graphics tablet, a scanner, a touchscreen incorporated into the display, audio input devices such as voice recognition systems, microphones, and other types of input devices. In general, use of the term "input device" is intended to include all possible types of devices and ways to input information into computer system 2010 or onto communication network 2018.

User interface output devices 2020 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 2010 to the user or to another machine or computer system.

Storage subsystem 2024 stores the basic programming and data constructs that provide the functionality of some or all of the EDA tools described herein, including the nanowire cell library in which at least on functional cell specifies a circuit implementation utilizing parallel sets of vertical and/or horizontal nanowires as described herein, and tools applied for development of functional cells for the library and for physical and logical design using the library. These software modules are generally executed by processor 2014.

Memory subsystem 2026 typically includes a number of memories including a main random access memory (RAM) 2030 for storage of instructions and data during program execution and a read only memory (ROM) 2032 in which fixed instructions are stored. File storage subsystem 2028 provides persistent storage for program and data files, and may include a hard disk drive, a floppy disk drive along with associated removable media, a CD-ROM drive, an optical drive, or removable media cartridges. The databases and modules implementing the functionality may be stored by file storage subsystem 2028.

Bus subsystem 2012 provides a mechanism for letting the various components and subsystems of computer system 2010 communicate with each other as intended. Although bus subsystem 2012 is shown schematically as a single bus, alternative examples of the bus subsystem may use multiple busses.

Computer system 2010 itself can be of varying types including a personal computer, a portable computer, a workstation, a computer terminal, a network computer, a television, a mainframe, or any other data processing system or user device. Due to the ever-changing nature of computers and networks, the description of computer system 2010 depicted in Figure 17A is intended only as a specific example for purposes of illustration. Many other configurations of computer system 2010 are possible having more or less components than the computer system depicted in Figure 17A.

Figure 17B shows a memory 2040 such as a non-transitory, computer readable data storage medium associated with file storage subsystem 2028, and/or with network interface subsystem 2016 can include a data structure specifying a circuit design that includes functional cells from the nanowire cell library, or other nanowire cell-based or block-based functional cells as described in detail below. In other examples, the memory 2040 stores a functional cell library that includes functional cells implemented using a flexible nanowire cell structure. The memory 2040 can be a hard disk, a floppy disk, a CD-ROM, an optical medium, removable media cartridge, or other medium that stores computer readable data in a volatile or non-volatile form. The memory 2040 is shown storing a circuit design 2080, including for example a description of geometric features of a circuit implementing a functional cell or macrocell, that includes one or more nanowire block functional cells created with the nanowire technology described herein.

Figure 17C is a block representing an integrated circuit 2090 created with the described technology that includes one or more nanowire functional cells, and/or functional cells selected from a nanowire cell library.

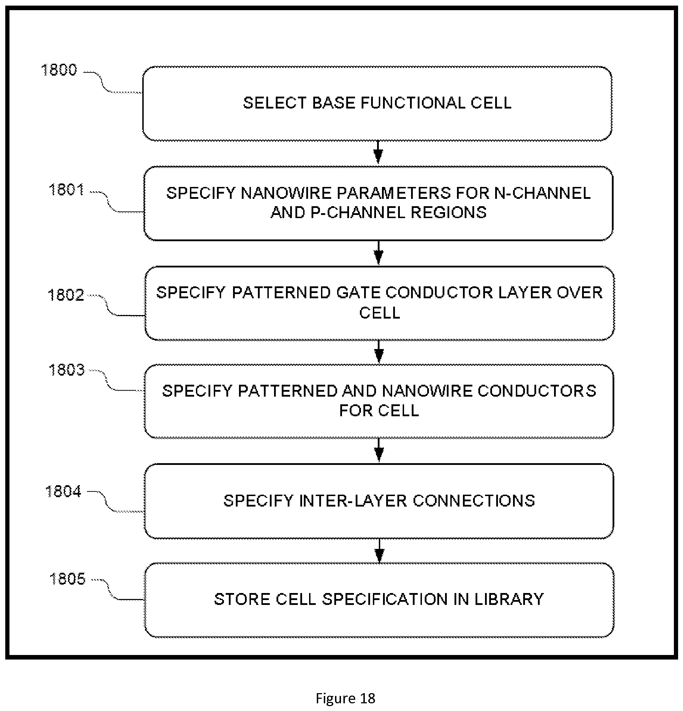

Figure 18 is a simplified flow diagram of a process for designing a nanowire cell for a cell library. The method may be performed, for example, by an interactive software tool that is used by a cell designer to create a library of cells. The order of the steps can be modified as suits a particular design. According to the simplified flow diagram, a base functional cell to be included in a cell library is selected (2100). Such a base cell can be an inverter as described above, a flip-flop, logic gates, logic blocks or other cell structures. A base cell may consist of a configuration like that of Figures 3A-3B or 4A-4B in which the number of rows of p-channel nanowires, the number of layers of p-channel nanowires, the number of rows of n-channel nanowires, and the number of layers of n-channel nanowires are selectable parameters, within a set of parameters available according to a target manufacturing process or target manufacturing processes. In other examples, the user may specify a cell characteristic, such as conductance of the transistors in the on state, or drive ability of the cell. The design tool could use the user specified characteristic to determine cell features including the number of rows and layers of p-channel nanowires, and the number of rows and layers of n-channel nanowires. User input may specify or provide input used to determine other features, including gate dimensions for example, and features relating to the shape and location of objects in the cell (e.g., cell boundary, location and width of power conductors, gates, active areas) and so on (2101). Then, the patterned gate conductor layer is specified, to form gates in rows overlying the sets of nanowires that will be used for transistors in the cell (2102). Then, the patterned conductor layers are specified, to establish appropriate interconnections, preferably including a layer having conductors arranged in columns, and a layer having conductors arranged in rows (2103). The plurality of patterned conductor layers includes power conductors. Then the interlayer connections are specified, to locate connections among the nanowires, the gate conductors, nanowire interconnects and the conductors in the one or more patterned conductor layers (2104). The specifications produced in this method comprise layout files implemented in a GDS II format database file representing the specified geometric shapes of the elements and nanowire shapes, or other computer readable format. The specified cells are then stored in a cell library for use in integrated circuit design (2105). The process may be repeated to generate a cell library that includes a large number of cells implementing different functions and performance specifications. In addition, a cell library can be implemented in which a plurality of entries specify implementations of a common circuit configuration, such as a NAND gate circuit as shown in Figure 1B. Each of the entries specifying a common NAND gate circuit using nanowires can differ in the number of nanowires used for a particular transistor or used for a particular interconnect. For example, the particular transistor 633 in the circuit configuration of Figure 1B can have a set of nine nanowires in one entry in the cell library, and have a set of 10 nanowires in another entry in the cell library.

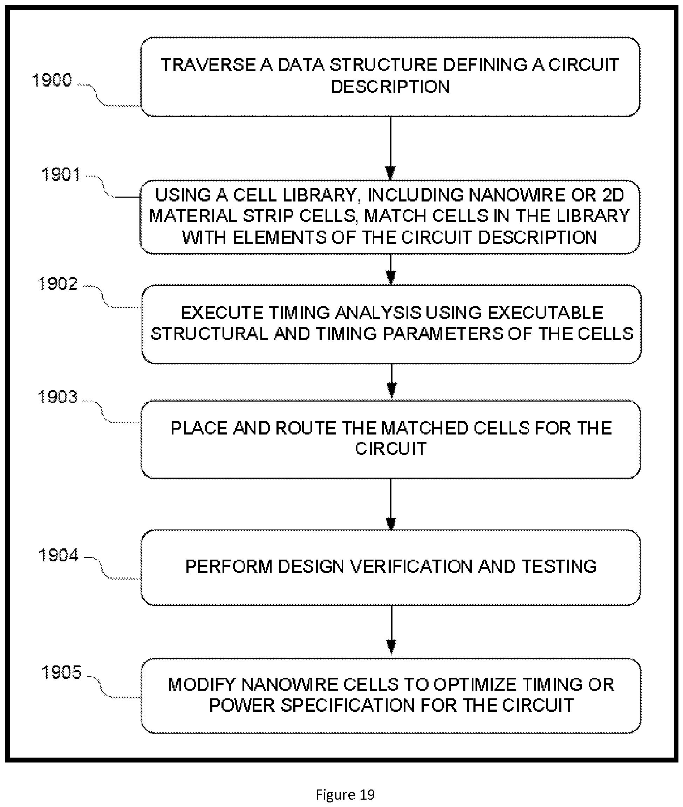

Figure 19 is a flowchart for a representative design automation process which can be implemented as logic executed by a system like that represented by Figures 17A, 17B and 17C, including a nanowire cell library having cells implemented using at least one nanowire cell as described herein. According to a first step of the process, a data structure that defines a circuit description, such as a netlist, is traversed in data processing system (2200). A cell library stored in a database or other computer readable medium coupled with the data processing system, that includes nanowire cells as described herein, is accessed by the data processing system, and utilized to match cells in the library with the elements of the circuit description (2201). The matched cells are then placed and routed for an integrated circuit layout (2202). Next, design verification and testing is executed (2203). Finally, nanowire cells can be modified to optimize timing or power specifications for the circuit (2204). The modifications of the nanowire cells can comprise mask changes that result in changes to the conductors in the patterned conductor layers, and in the pattern of interlayer connectors, to change the number of nanowires utilized in a particular transistor. These changes can be accomplished in some instances without changing the area on the integrated circuit occupied by the cell.

A nanowire cell architecture described above can be utilized to create a flexible library that comprises a plurality of nanowire cells meeting different functional specifications.

In general, the creation of a nanowire cell flexible library is enabled using the nanowire architectures described herein. In such library, the standard cells can consist of "soft macros" that could be populated with some flexibility as to the exact location, or the exact number of nanowires used in implementation, of their underlying elements. Unlike planar CMOS structures, where the granularity for modifications or adjustments of the cells is the whole transistor, in nanowire cell architectures as described herein, the granularity can be a single nanowire.

A library can be comprised of a plurality of nanowire cell functional cells which exploit subsets of the available nanowire options in the cells, leaving room for optimization procedures that do not alter the area of the layout.

The following table provides a representation of an organization a functional cell library having a plurality of entries. Some of the information which can be included in the entries as illustrated in the table.

| | |
|---|---|
| NAND-1 | Layout file including transistors T1, T2, ... and interconnects X1, X2 ... |
| | n-channel T1 having parallel nanowire channel - 3 stacks of 3 layers each, |
| | p-channel T2 having parallel nanowire channel- 4 stacks of 3 layers each, |
| | n-channel T3 having 6 parallel nanowire channel - 2 stacks of 3 layers each, |
| | ... |
| | Interconnect X1 having 16 parallel nanowires |
| | Interconnect X2 having 8 parallel nanowires |
| | ... |
| NAND-2 | Layout file including transistors T1, T2, ... and interconnects X1, X2 ... |
| | n-channel T1 having parallel nanowire channel - 2 stacks of 5 layers each,, |
| | p-channel T2 having parallel nanowire channel- 2 stacks of 6 layers each, |
| | n-channel T3 having parallel nanowire channel- 3 stacks of 2 layers each and 1 stack of 2X width and layers |
| | ... |
| | Interconnect X1 having 16 parallel nanowires |
| | Interconnect X2 having 8 parallel nanowires |
| | ... |
| ... | |
| NOR-1 | Layout file including transistors T1, T2, ... and interconnects X1, X2 ... |
| | n-channel T1 having 10 parallel nanowire channel, |
| | p-channel T2 having 12 parallel nanowire channel |
| | n-channel T3 having 8 parallel nanowire channel |
| | ... |
| | Interconnect X1 having 16 parallel nanowires |
| | Interconnect X2 having 8 parallel nanowires |
| NOR-2 | Layout file including transistors T1, T2, ... and interconnects X1, X2 ... |
| | n-channel T1 having 9 parallel nanowire channel, |
| | p-channel T2 having 12 parallel nanowire channel |
| | n-channel T3 having 6 parallel nanowire channel |
| | ... |
| | Interconnect X1 having 16 parallel nanowires |
| | Interconnect X2 having 8 parallel nanowires |
| ... | |
| BUFFER 1 | Layout file including transistors T1, T2, ... and interconnects X1, X2 ... |
| | n-channel T1 having 9 parallel nanowire channel, |
| | p-channel T2 having 12 parallel nanowire channel |
| | ... |
| | Interconnect X1 having 16 parallel nanowires Interconnect X2 having 8 parallel nanowires |
| BUFFER 2 | Layout file including transistors T1, T2, ... and interconnects X1, X2 ... |
| | n-channel T1 having 3 parallel nanowire channel, |
| | p-channel T2 having 5 parallel nanowire channel |
| | ... |
| | Interconnect X1 having 8 parallel nanowires |
| | Interconnect X2 having 8 parallel nanowires |
| ... | |
| SRAM ARRAY MACROCELL 1 | Unit cell file including transistors T1, T2, ... and interconnects X1, X2 ... |
| | n-channel T1 having 9 parallel horizontal nanowire channel, |
| | p-channel T2 having 12 parallel horizontal nanowire channel |
| | n-channel T3 having 6 parallel horizontal nanowire channel |
| | ... |
| | Interconnect X1 having ... Interconnect X2 having ... |
| | |
| | Bit lines ... |
| | Word lines ... |
| SRAM ARRAY MACROCELL 2 | Unit cell layout file including transistors T1, T2, ... and interconnects X1, X2 ... |
| | n-channel T1 having 3 parallel vertical nanowire channel, |
| | p-channel T2 having 3 parallel vertical nanowire channel |
| | n-channel T3 having 3 parallel vertical nanowire channel |
| | ... |
| | Interconnect X1 having ... |
| | Interconnect X2 having ... |
| | |
| | Bit lines comprising horizontal sets of nanowires interconnecting unit cells Word lines ... |
| ... | |

In the functional cell library represented by the above table there is a set of entries for NAND cells, including NAND-1 and NAND-1. The entries in the set of entries specifying NAND cells can specify a functional circuit having in common a circuit configuration for a NAND cell. Entries in the set specifying a functional circuit having a common circuit configuration specify implementation the same number of transistors interconnected in the same manner. The entries can differ as described herein, in the number of parallel nanowires utilized in particular transistors. Thus, for the entry NAND-1, the specified n-channel transistor T1 has a channel comprising a set of nine parallel nanowires, arranged in three stacks of three layers each. The specified p-channel transistor T2 as a channel comprising a set of 12 parallel nanowires, arranged in four stacks of three layers each. The specified n-channel transistor T3 as a channel comprising six parallel nanowires, arranged in two stacks of three layers each. For the entry NAND-2, the specified n-channel transistor T1 has a channel comprising a set of 10 parallel nanowires, arranged in two stacks of five layers each. The specified p-channel transistor T2 as a channel comprising a set of 12 parallel nanowires, arranged in two stacks of six layers each. The specified n-channel transistor T3 as a channel comprising eight parallel nanowires, arranged in four stacks of two layers each and in which the nanowire in one of the four stacks consists of nanowires have a width greater than two times the height ("2X width"). The entries in a set of entries for a particular functional cell can differ only in the number of parallel nanowires in the channel of a particular transistor. Alternatively, entries in the set of entries for particular functional cell can differ only in the number of parallel nanowires used in a particular interconnect within the cell.

The cell library represented by the table also includes a set of entries specifying NOR cells and a set of entries specifying buffers. The entries in the set of the NOR cells have in common the same circuit configuration, where the differences arise in the number of parallel nanowires used in the various components within the cell. Likewise, the entries in the set of buffer cells have in common the same circuit configuration, and differences that arise in the number of parallel nanowires used in the various components within the cell.

The cell library also includes entries that specify SRAM macro cells, where a macrocell consists of a plurality of unit cells and connections between the unit cells. For SRAM macro cells, the unit cell can be a six transistor memory element. The number of nanowires utilized in the various transistors within the unit cell can be tuned for the purposes of optimizing performance of the unit cell. The SRAM macro cells can differ in the form of the bit lines utilized for connections among the unit cells. Thus, SRAM ARRAY MACROCELL 1 can specify a patterned metal layer interconnected with horizontal nanowire transistors, to act as bit lines. SRAM ARRAY MACROCELL 2 can specify bit lines that comprise a horizontal sets of nanowires that interconnect the unit cells, which in turn comprise transistors having channels consisting of parallel vertical nanowires.

The entries in the cell library can be selected according to performance specifications provided by a user to satisfy the elements in a circuit design, such as a netlist.

Specifications provided by the entries can define the geometry of the components of the cells and macrocells. Also, the entries can define or be utilized to define lithographic mask layers for each cell or macrocell and for a circuit incorporating the cells or macrocells. The specifications can then be utilized to produce a set of masks for a manufacturing process implementing the cells or macrocells selected for the circuit design, or implementing a circuit incorporating the cells or macrocells.

While the present invention is disclosed by reference to the examples detailed above, it is to be understood that these examples are intended in an illustrative rather than in a limiting sense.

## Claims

1. A circuit, comprising:
- a plurality of nanowire transistors, including a first vertical nanowire transistor (333) and a second vertical nanowire transistor (334) disposed vertically relative to a surface of a substrate, the first vertical nanowire transistor (333) having a first vertical channel comprising a first set of vertical nanowires arranged in parallel and having at least two members, the second vertical nanowire transistor (334) having a second vertical channel comprising a second set of vertical nanowires arranged in parallel and having at least two members;
- a vertical nanowire interconnect (380) disposed vertically relative to the surface of the substrate; and
- a horizontal connector island connecting a first terminal of the vertical nanowires in the first set of vertical nanowires in the first vertical nanowire transistor (333) to the vertical nanowire interconnect (380), the horizontal connector island disposed horizontally relative to the surface of the substrate, beneath the first vertical nanowire transistor (333), and insulated from the substrate;
- wherein the vertical nanowire interconnect (380) comprises a set of nanowires having at least two members connected in parallel, the set of nanowires in the vertical nanowire interconnect (380) being connected in parallel between a source region (323) of the first vertical nanowire transistor (333) and a horizontal drain conductor (344) of the second vertical nanowire transistor (334),
- wherein at least the first and second vertical nanowire transistors (333, 334) in the plurality are electrically in series via at least the vertical nanowire interconnect (380).

2. The circuit of claim 1, wherein said at least first and second vertical nanowire transistors (333, 334) are oriented vertically relative to a substrate.

3. The circuit of claim 1, wherein said first vertical nanowire transistor (333) and said second vertical nanowire transistor (334) are a same conductivity type.

4. The circuit of claim 1, wherein the vertical nanowire interconnect (380) has an opposite conductivity type in contrast with said first vertical nanowire transistor (333) and said second vertical nanowire transistor (334).

5. The circuit of claim 1, wherein said first vertical nanowire transistor (333) and second vertical nanowire transistor (334) both are n-type transistors.

6. The circuit of claim 1, the circuit including:
- an array of circuit cells, the circuit cells including the plurality of nanowire transistors and the vertical nanowire interconnect (380),
- wherein the plurality of nanowire transistors includes:
- the first vertical nanowire transistor (333) including: a first gate at a first intermediate height in between a first source at a first source height and a first drain at a first drain height; and
- the second vertical nanowire transistor (334) including: a second gate at a second intermediate height in between a second source at a second source height and a second drain at a second drain height;
- wherein the vertical nanowire interconnect (380) traverses the first intermediate height of the first vertical nanowire transistor (333), and traverses the second intermediate height of the second vertical nanowire transistor (334), to electrically couple in series the first vertical nanowire transistor (333) and the second vertical nanowire transistor (334).

7. The circuit of claim 1, wherein said first vertical nanowire transistor (333) and said second vertical nanowire transistor (334) are a same conductivity type,
- wherein the circuit further comprises:
- a third vertical nanowire transistor and a fourth vertical nanowire transistor having an opposite conductivity type in contrast with said first vertical nanowire transistor (333) and said second vertical nanowire transistor (334);
- a first conductor electrically connecting the first gate of the first vertical nanowire transistor (333) with a third gate of the third vertical nanowire transistor; and
- a second conductor electrically connecting the second gate of the second vertical nanowire transistor (334) with a fourth gate of the fourth vertical nanowire transistor,
- wherein the first conductor and the second conductor are different electrical inputs of a NAND gate.

## Patentansprüche

1. Eine Schaltung, umfassend:
- eine Vielzahl von Nanodrahttransistoren, einschließlich eines ersten vertikalen Nanodrahttransistors (333) und eines zweiten vertikalen Nanodrahttransistors (334), die vertikal in Bezug auf eine Oberfläche eines Substrats angeordnet sind, wobei der erste vertikale Nanodrahttransistor (333) einen ersten vertikalen Kanal aufweist, der einen ersten Satz von vertikalen, parallel angeordneten Nanodrähten und mindestens zwei Elemente aufweist, wobei der zweite vertikale Nanodrahttransistor (334) einen zweiten vertikalen Kanal aufweist, der einen zweiten Satz von vertikalen, parallel angeordneten Nanodrähten und mindestens zwei Elemente aufweist;
- eine vertikale Nanodrahtverbindung (380), die vertikal in Bezug auf die Oberfläche des Substrats angeordnet ist; und
- eine horizontale Verbindungsinsel, die einen ersten Anschluss der vertikalen Nanodrähte im ersten Satz von vertikalen Nanodrähten im ersten vertikalen Nanodrahttransistor (333) mit der vertikalen Nanodrahtverbindung (380) verbindet, wobei die horizontale Verbindungsinsel horizontal in Bezug auf die Oberfläche des Substrats unter dem ersten vertikalen Nanodrahttransistor (333) angeordnet und vom Substrat isoliert ist;
- wobei die vertikale Nanodrahtverbindung (380) einen Satz von Nanodrähten mit mindestens zwei parallel geschalteten Elementen umfasst, wobei der Satz von Nanodrähten in der vertikalen Nanodrahtverbindung (380) parallel zwischen einem Quellbereich (323) des ersten vertikalen Nanodrahttransistors (333) und einem horizontalen Abflussleiter (344) des zweiten vertikalen Nanodrahttransistors (334) geschaltet ist,
- wobei mindestens der erste und zweite vertikale Nanodrahttransistor (333, 334) in der Vielzahl elektrisch in Reihe über mindestens die vertikale Nanodrahtverbindung (380) geschaltet sind.

2. Die Schaltung nach Anspruch 1, wobei die mindestens ersten und zweiten vertikalen Nanodrahttransistoren (333, 334) vertikal relativ zu einem Substrat ausgerichtet sind.

3. Die Schaltung nach Anspruch 1, wobei der erste vertikale Nanodrahttransistor (333) und der zweite vertikale Nanodrahttransistor (334) einen gleichen Leitfähigkeitstyp aufweisen.

4. Die Schaltung nach Anspruch 1, wobei die vertikale Nanodrahtverbindung (380) einen entgegengesetzten Leitfähigkeitstyp im Gegensatz zu dem ersten vertikalen Nanodrahttransistor (333) und dem zweiten vertikalen Nanodrahttransistor (334) aufweist.

5. Die Schaltung nach Anspruch 1, wobei der erste vertikale Nanodrahttransistor (333) und der zweite vertikale Nanodrahttransistor (334) beide N-Typ-Transistoren sind.

6. Die Schaltung nach Anspruch 1, wobei die Schaltung beinhaltet:
- eine Anordnung von Schaltungszellen, wobei die Schaltungszellen die Vielzahl von Nanodrahttransistoren und die vertikale Nanodrahtverbindung (380) beinhalten,
- wobei die Vielzahl von Nanodrahttransistoren beinhaltet:
- den ersten vertikalen Nanodrahttransistor (333) umfassend: ein erstes Gate auf einer ersten Zwischenhöhe zwischen einer ersten Quelle auf einer ersten Quellenhöhe und einem ersten Abflussauf einer ersten Abflusshöhe; und
- den zweiten vertikalen Nanodrahttransistor (334) umfassend: ein zweites Gate auf einer zweiten Zwischenhöhe zwischen einer zweiten Quelle auf einer zweiten Quellenhöhe und einem zweiten Abfluss auf einer zweiten Abflusshöhe;
- wobei die vertikale Nanodrahtverbindung (380) die erste Zwischenhöhe des ersten vertikalen Nanodrahttransistors (333) durchläuft und die zweite Zwischenhöhe des zweiten vertikalen Nanodrahttransistors (334) durchläuft, um den ersten vertikalen Nanodrahttransistor (333) und den zweiten vertikalen Nanodrahttransistor (334) elektrisch in Reihe zu schalten.

7. Die Schaltung nach Anspruch 1, wobei der erste vertikale Nanodrahttransistor (333) und der zweite vertikale Nanodrahttransistor (334) einen gleichen Leitfähigkeitstyp aufweisen,
- wobei die Schaltung ferner umfasst:
- einen dritten vertikalen Nanodrahttransistor und einen vierten vertikalen Nanodrahttransistor mit einem entgegengesetzten Leitfähigkeitstyp im Gegensatz zu dem ersten vertikalen Nanodrahttransistor (333) und dem zweiten vertikalen Nanodrahttransistor (334);
- einen ersten Leiter, der das erste Gate des ersten vertikalen Nanodrahttransistors (333) elektrisch mit einem dritten Gate des dritten vertikalen Nanodrahttransistors verbindet; und
- einen zweiten Leiter, der das zweite Gate des zweiten vertikalen Nanodrahttransistors (334) elektrisch mit einem vierten Gate des vierten vertikalen Nanodrahttransistors verbindet,
- wobei der erste Leiter und der zweite Leiter verschiedene elektrische Eingänge eines NAND-Gates sind.

## Revendications

1. Circuit, comprenant :
- une pluralité de transistors de nanofils, comprenant un premier transistor de nanofils verticaux (333) et un second transistor de nanofils verticaux (334) disposés verticalement par rapport à une surface d'un substrat, le premier transistor de nanofils verticaux (333) ayant un premier canal vertical comprenant un premier ensemble de nanofils verticaux disposés en parallèle et ayant au moins deux éléments, le second transistor de nanofils verticaux (334) ayant un second canal vertical comprenant un second ensemble de nanofils verticaux disposés en parallèle et ayant au moins deux éléments ;
- une interconnexion de nanofils verticaux (380) disposée verticalement par rapport à la surface du substrat ; et
- un îlot de connexion horizontal reliant une première borne des nanofils verticaux dans le premier ensemble de nanofils verticaux dans le premier transistor de nanofils verticaux (333) à l'interconnexion de nanofils verticaux (380), l'îlot de connexion horizontal disposé horizontalement par rapport à la surface du substrat, sous le premier transistor de nanofils verticaux (333) et isolé du substrat ;
- dans laquelle l'interconnexion de nanofils verticaux (380) comprend un ensemble de nanofils ayant au moins deux éléments connectés en parallèle, l'ensemble de nanofils dans l'interconnexion de nanofils verticaux (380) étant connecté en parallèle entre une région source (323) du premier transistor de nanofils verticaux (333) et un conducteur de drain horizontal (344) du second transistor de nanofils verticaux (334),
- dans laquelle au moins les premier et second transistors de nanofils verticaux (333, 334) de la pluralité sont électriquement en série via au moins l'interconnexion verticale de nanofils (380).

2. Circuit selon la revendication 1, dans lequel lesdits au moins premier et second transistors de nanofils verticaux (333, 334) sont orientés verticalement par rapport à un substrat.

3. Circuit selon la revendication 1, dans lequel ledit premier transistor de nanofils verticaux (333) et ledit deuxième transistor de nanofils verticaux (334) sont du même type de conductivité.

4. Circuit selon la revendication 1, dans lequel l'interconnexion de nanofils verticaux (380) a un type de conductivité opposé à celui dudit premier transistor de nanofils verticaux (333) et dudit second transistor de nanofils verticaux (334).

5. Circuit selon la revendication 1, dans lequel ledit premier transistor de nanofils verticaux (333) et ledit second transistor de nanofils verticaux (334) sont tous deux des transistors de type n.

6. Le circuit de la revendication 1, le circuit comprenant :
- un réseau de cellules de circuit, les cellules de circuit comprenant la pluralité de transistors nanofils et l'interconnexion de nanofils verticaux (380),
- dans laquelle la pluralité de transistors nanofils comprend :
- le premier transistor de nanofils verticaux (333) comprenant : une première grille à une première hauteur intermédiaire entre une première source à une première hauteur de source et un premier drain à une première hauteur de drain ; et
- le second transistor de nanofils verticaux (334) comprenant: une seconde grille à une seconde hauteur intermédiaire entre une seconde source à une seconde hauteur de source et un second drain à une seconde hauteur de drain ;
- dans laquelle l'interconnexion de nanofils verticaux (380) traverse la première hauteur intermédiaire du premier transistor de nanofils verticaux (333), et traverse la seconde hauteur intermédiaire du second transistor de nanofils verticaux (334), pour coupler électriquement en série le premier transistor de nanofils verticaux (333) et le second transistor de nanofils verticaux (334).

7. Circuit selon la revendication 1, dans lequel ledit premier transistor de nanofils verticaux (333) et ledit deuxième transistor de nanofils verticaux (334) sont du même type de conductivité,
- dans lequel le circuit comprend en outre :
- un troisième transistor de nanofils verticaux et un quatrième transistor de nanofils verticaux ayant un type de conductivité opposée par opposition audit premier transistor de nanofils verticaux (333) et audit deuxième transistor de nanofils verticaux (334) ;
- un premier conducteur reliant électriquement la première grille du premier transistor de nanofils verticaux (333) à une troisième grille du troisième transistor de nanofils verticaux ; et
- un deuxième conducteur reliant électriquement la deuxième grille du deuxième transistor de nanofils verticaux (334) à une quatrième grille du quatrième transistor de nanofils verticaux,
- dans laquelle le premier conducteur et le second conducteur sont des entrées électriques différentes d'une porte NAND.
